# EUROPÄISCHE PATENTSCHRIFT

(11) **EP 0 692 215 B1**
(45) Veröffentlichungstag und Bekanntmachung des Hinweises auf die Patenterteilung: **13.08.1997**
(21) Anmeldenummer: 95109179.2
(22) Anmeldetag: 14.06.1995
(51) Int. Cl.: A47J 43/044, A47J 43/08

(54) **Handmixer**
Portable mixer
Mixeur à main

(30) Priorität: 12.07.1994 DE 4424501
(43) Veröffentlichungstag der Anmeldung: 17.01.1996
(73) Patentinhaber: Braun Aktiengesellschaft, Frankfurt am Main (DE)
(72) Erfinder: Fritsch, Thomas, D-65817 Eppstein (DE)

(56) Entgegenhaltungen:
- DE-A- 2 802 155
- DE-U- 1 952 912
- FR-A- 1 467 108
- US-A- 2 639 904

## Beschreibung

Die Erfindung betrifft einen vorzugsweise elektrisch angetriebenen Handmixer, bei dem das eigentliche Werkzeug austauschbar mit einem Antriebsmotor verbunden ist, mit den Merkmalen des Oberbegriffs des Anspruchs 1.

Verwendet werden derartige Handmixer als Küchengeräte wie Handrührer oder Stabmixer, bei denen das eigentliche Werkzeug, beispielsweise ein Quirl, ein Kneter oder ein Zerkleinerungsstab, austauschbar ist.

Im deutschen Gebrauchsmuster 1 952 912 ist ein Handrührgerät gemäß dem Oberbegriff des Anspruchs 1 offenbart, das ein Motorteil aufweist, mit dem eine Werkzeugwelle, die in einem Werkzeugschaft drehbar gelagert ist, lösbar verbunden ist. Zum Befestigen weist die Werkzeugwelle eine umlaufende Nut auf, in die ein elastisches Rastmittel des Motorteils eingreift. Die Drehmomentübertragung erfolgt über eine formschlüssige Kupplung.

Von Nachteil bei dem bekannten Handrührgerät ist, daß nicht der Werkzeugschaft mit dem Motorteil verbunden ist, sondern daß die Befestigung über das in die umiaufende Nut der Werkzeugwelle eingreifende Rastmittel und über die Lagerung der Werkzeugwelle im Werkzeugschaff erfolgt. Eine spielfreie Befestigung des Werkzeugschafts am Motorteil läßt sich damit nur schwer bewerkstelligen. Weiterer Nachteil ist die Relativbewegung zwischen der sich drehenden Werkzeugwelle und dem im Motorteil feststehenden Rastmittel. Dies bewirkt eine unerwünschte Reibung und Abnutzung.

Der Erfindung liegt daher die Aufgabe zugrunde, einen Handmixer der eingangs genannten Art so weiterzubilden, daß eine zuverlässige und stabile Verbindung zwischen dem Werkzeugschaft und dem Motorteil gewährleistet und daß diese Verbindung leicht und schnell von Hand lösbar ist.

Diese Aufgabe wird gemäß der Erfindung durch die Merkmale des Anspruchs 1 gelöst. Die Befestigungsnut am Werkzeugschaff zum Eingreifen der Spreizklammer des Motorteils kann umlaufend ausgebildet sein, sie kann auch mehrere Befestigungsnutabschnitte an den Stellen des Umfangs des Werkzeugsschafts aufweisen, in die die Spreizklammer eingreift.

Mit der Erfindung wird auf einfache Weise eine stabile, lösbare Verbindung zwischen dem Motorteil und dem Werkzeugschaft erreicht. Die Verbindung ist einfach lösbar, wodurch ein Wechsel des eigentlichen Werkzeugs schnell vonstatten geht.

Bevorzugt greift die Spreizklammer an mehreren Stellen, die ungefähr gleichmäßig über den Umfang verteilt sind, in die Befestigungsnut ein. Eine Befestigung durch einen Eingriff an zwei einander in etwa diametral gegenüberliegenden Stellen in die Befestigungsnut reicht aus. Die Befestigung des Werkzeugschafts im Motorteil ist dadurch symmetrisch in Bezug auf eine Längsachse des Werkzeugschafts, die mit Drehachse der Werkzeugwelle übereinstimmt. Es treten dadurch keine unzulässig hohen Belastungen der Befestigung des Werkzeugschafts am Motorteil auf, selbst wenn Querkräfte auf das dem Motorteil abgewandte Ende des Werkzeugschafts einwirken, wodurch Momentenbelastungen auftreten, die die Befestigung stark beanspruchen. Ein sicherer Sitz des Werkzeugschafts mit der in ihm gelagerten Werkzeugwelle am Motorteil ist gewährleistet.

Zum Lösen des Werkzeugschafts vom Motorteil sind zwei Druckknöpfe vorgesehen, mittels derer die Spreizklammer so gespreizt werden kann, daß sie aus der Befestigungsnut freikommt. Die Druckknöpfe sind einander gegenüberliegend am Motorteil angeordnet. Einer der beiden Druckknöpfe greift in einem Scheitelbereich der in etwa U-förmigen Spreizklammer an. Der andere Druckknopf weist einen Spreizkeil auf, dessen Keilflächen sich an den freien Schenkelenden der Spreizklammer befinden. Werden die beiden Druckknöpfe zusammengedrückt, d.h. aufeinander zu bewegt, so verschiebt der eine Druckknopf die Spreizklammer auf den anderen Druckknopf zu. Zugleich wird über den anderen Druckknopf der Spreizkeil zwischen die beiden Schenkelenden hineingeschoben, die Schenkelenden gleiten an den Keilflächen auf und die Spreizklammer wird so weit gespreizt, daß sie aus der Befestigungsnut des Werkzeugschafts freikommt. Der Werkzeugschaft kann vom Motorteil abgenommen werden. Durch die Verwendung zweier Druckknöpfe zum Lösen des Werkzeugschafts, von denen der eine die Spreizklammer auf den anderen zu verschiebt, während gleichzeitig der andere den Spreizkeil dieser Verschiebung entgegen zwischen die Schenkelenden der Spreizklammer drückt, wird lediglich ein kurzer Betätigungshub der beiden Druckknöpfe benötigt.

Um Verschmutzungen aus dem Inneren des Motorteils fernzuhalten, sind die beiden Druckknöpfe mit einer Membran abgedeckt. Ein Gehäuse des Motorteils ist an den Druckknöpfen hermetisch abgeschlossen. Es läßt sich durch eine glatte Außenfläche leicht reinigen. Die Membran wird wegen des kurzen Betätigungshubs der Druckknöpfe nur wenig verformt, was ihrer Lebensdauer zugute kommt.

Zum Befestigen des Werkzeugschafts am Motorteil ist das dem Motorteil zugewandte Ende des Werkzeugschafts mit einer Kegelstumpffläche versehen. Beim Einsetzen des Werkzeugschafts in den Motorteil spreizt diese Kegelstumpffläche die Spreizklammer auf, so daß der Werkzeugschaft soweit in eine Schaftaufnahme des Motorteils hineingedrückt werden kann, bis die Spreizklammer in der Befestigungsnut des Werkzeugschafts einrastet und der Werkzeugschaft am Motorteil befestigt ist. Die Druckknöpfe brauchen zum Einsetzen des Werkzeugsschafts nicht betätigt werden.

Zur Verdrehsicherung weist der Werkzeugschaft einen Vielkant, einen exzentrisch zur Achse der Werkzeugwelle angeordneten Stift oder dgl. auf, der mit der korrespondierenden Schaftaufnahme des Motorteils zusammenwirkt.

Zum Abnehmen des Werkzeugschafts vom Motorteil weisen die Druckknöpfe Schrägflächen auf. Diese kommen an dem Ende des Werkzeugschafts zur Anlage, das dem Motorteil zugewandt ist, wenn die Druckknöpfe soweit zusammengedrückt sind, daß die Spreizklammer aus der Befestigungsnut heraus gespreizt ist. Insbesondere greifen die Schrägflächen an der Kegelstumpffläche, die zum Spreizen der Spreizklammer beim Einsetzen des Werkzeugschafts dient, an. Beim weiteren Zusammendrücken der Druckknöpfe drücken die Schrägflächen den Werkzeugschaft vom Motorteil ab. Die Keilflächen werden erst wirksam, nachdem die Spreizklammer gespreizt, die Befestigung des Werkzeugschafts am Motorteil also gelöst ist. Auf diese Weise wird das Abnehmen des Werkzeugschafts vom Motorteil unterstützt. Der Werkzeugschaft, der durch den Gebrauch verschmutzt sein kann, braucht zum Abnehmen nicht angefaßt zu werden, er läßt sich mit einer Hand, die den Motorteil hält und deren Daumen und Zeigefinger die Druckknöpfe zusammendrücken, vom Motorteil entfernen.

Bei einer bevorzugten Ausgestaltung der Erfindung stehen die Druckknöpfe, ggf. zusammen mit der sie überdeckenden Membran, nicht oder nur gering von der Außenseite des Motorteils ab, um zu vermeiden, daß der Werkzeugschaft versehentlich gelöst wird, was bei nach außen abstehenden Betätigungselementen zum Lösen des Werkzeugschafts durchaus der Fall sein könnte.

Eine Trennfuge zwischen dem Gehäuse des Motorteils und dem Werkzeugschaft ist mit einer Dichtung abgedichtet, um das Eindringen von Schmutz zu verhindern. Das Werkzeug läßt sich durch einen im Wesentlichen glatten Übergang vom Werkzeugschaft zum Motorteil leicht reinigen.

Die Erfindung wird im Folgenden anhand der Zeichnung näher erläutert, in der ein Ausführungsbeispiel dargestellt ist. Es zeigen:
- Fig. la bis c: einen Achsschnitt durch den Verbindungsbereich einer Ausführungsform des erfindungsgemäßen Werkzeugs; und

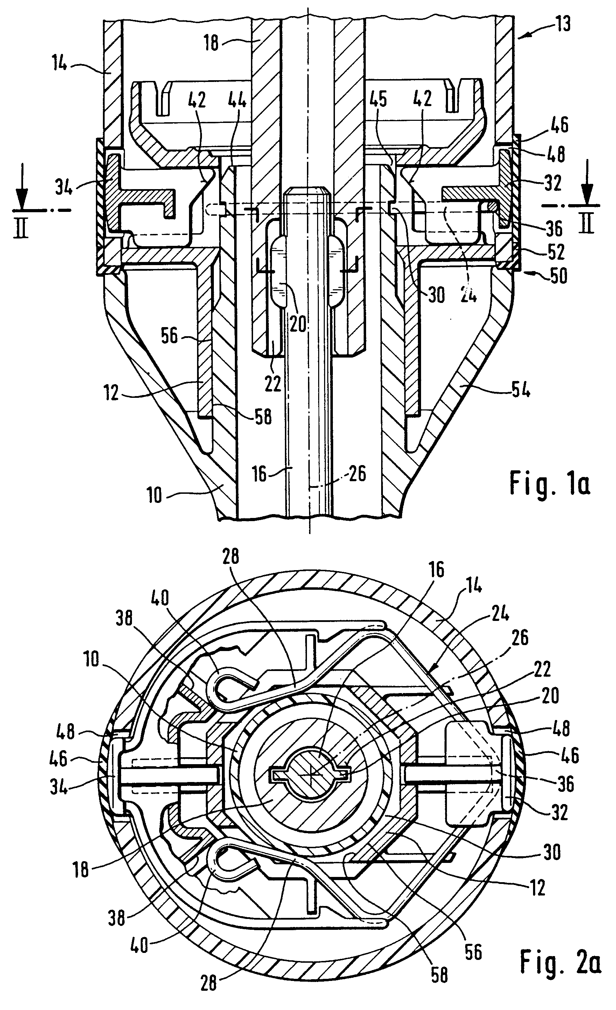

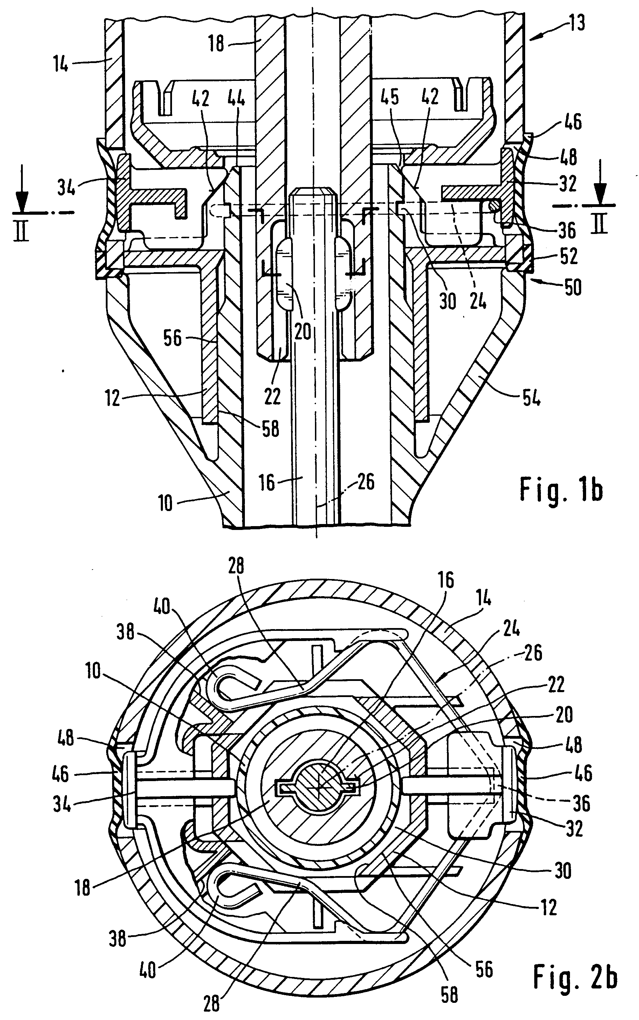

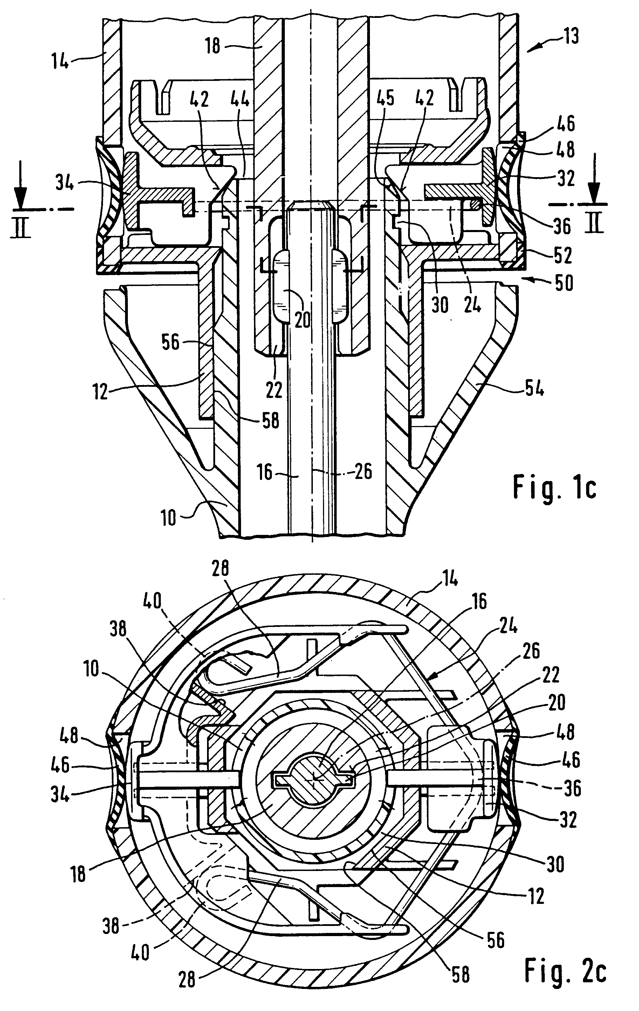

- Fig. 2a bis c: einen Querschnitt entlang Linie II-II in Fig. la bis c.

Die Figuren zeigen einen Verbindungsbereich eines Stabmixers als Beispiel für ein erfindungsgemäßes, durch einen Elektromotor angetriebenes Werkzeug, welches aber hier selbst nicht dargestellt ist und welches aber in einer nach unten hin offenen Glocke schützend rotiert und dabei Nahrungsmittel zerkleinert.

In Fig. la und 2a ist ein langgestreckter, hohlzylindrischer Werkzeugschaft 10 in eine Schaftaufnahme 12 eines Motorteils 13 eingesteckt, dessen Gehäuse mit 14 bezeichnet ist. Im Werkzeugschaft 10 ist eine Werkzeugwelle 16 drehbar gelagert, an deren dem Motorteil 13 abgewandten Ende ein nicht dargestelltes Werkzeug angebracht ist. Das motorteilseitige Ende der Werkzeugwelle 16 steckt in einer als Hohlwelle ausgebildeteten Antriebswelle 18 des Motorteils 13.

Die Übertragung einer Drehbewegung der Antriebswelle 18 auf die Werkzeugwelle 16 erfolgt über eine formschlüssige Kupplung: zwei radial abstehende, in Längsrichtung verlaufende Flügel 20 sind an dem in der Antriebswelle 18 steckenden Ende aus der Werkzeugwelle 16 heraus gequetscht. Diese Flügel 20 befinden sich in Eingriff mit zwei in Längsrichtung verlaufenden Nuten 22 an der Innenseite der hohlen Antriebswelle 18.

Zur lösbaren Befestigung des Werkzeugschafts 10 am Motorteil 13 ist eine in etwa U-förmige Spreizklammer 24 in einer Ebene senkrecht zu einer Längsachse 26 des Werkzeugschafts 10 im Gehäuse 14 des Motorteils 13 angeordnet (die Längsachse 26 ist zugleich Drehachse der Werkzeugwelle 16 und der Antriebswelle 18). Die Spreizklammer 24 greift mit ihren beiden Klammerschenkeln 28 an zwei einander nahezu gegenüberliegenden Stellen in eine Befestigungsnut 30 ein, die umlaufend in der Außenseite an dem Ende des Werkzeugschafts 10 angebracht ist, der in die Schaftaufnahme 12 eingesteckt ist. Durch die Spreizklammer 24 ist der Werkzeugschaft 10 in seiner Längsrichtung am Gehäuse 14 gehalten, so daß er nicht aus der Schaftaufnahme 12 herausgezogen werden kann.

Zum Lösen des Werkzeugschafts 10 dienen 2 Druckknöpfe 32, 34 (diese sind der Klarheit der Darstellung wegen in Fig. 2a bis c in Draufsicht dargestellt): Diese Druckknöpfe 32, 34 sind einander gegenüberliegend mit radialem Abstand zur Drehachse 26 im Gehäuse 14 angeordnet. Sie können in radialer Richtung in das Gehäuse 14 hineingedrückt werden. Der in den Figuren jeweils rechte Druckknopf 32 greift an einem Scheitelpunkt 36 der Spreizklammer 24 an. Durch Eindrücken des Druckknopfs 32 in das Gehäuse 14 wird die Spreizklammer 24 in ihrer Ebene in Richtung des gegenüberliegenden Druckknopfs 34 verschoben. Dieser gegenüberliegende, in den Figuren links dargestellte Druckknopf 34 weist einen Spreizkeil mit Spreizflächen 38 auf, an welchen freie Enden 40 der Klammerschenkel 28 anliegen. Durch Änderung des Spreizkeilwinkels der Spreizfläche 38 kann der Entriegelungsweg der Rastung ziemlich beliebig an den Betätigungsweg der Druckknöpfe 32, 34 angepaßt werden.

Beim Verschieben der Spreizklammer 24 mittels des einen Druckknopfs 32 gleiten die freien Enden 40 der Klammerschenkel 28 an den Spreizflächen 38 auf, die Spreizklammer 24 wird etwas gespreizt. Zusätzlich wird beim Eindrücken des anderen Druckknopfs 34 dessen Spreizkeil zwischen die Klammerschenkel 28 hineingedrückt, wodurch die Klammerschenkel 28 von den Spreizflächen 38 ebenfalls auseinander gedrückt werden. Die Klammerschenkel 28 kommen aus der Befestigungsnut 30 frei, die Verbindung zwischen dem Werkzeugschaft 10 und dem Motorteil 13 ist gelöst, der Werkzeugschaft 10 kann abgenommen werden (Figuren lb und 2b).

Um das Abnehmen des Werkzeugsschafts 10 zu unterstützen, sind die Druckknöpfe 32, 34 mit Schrägflächen 42 versehen. Diese Schrägflächen 42 kommen an einem Umfangsrand 44 an dem dem Motorteil 13 zugewandten Ende des Werkzeugschafts 10 zur Anlage, wenn die beiden Druckknöpfe 32, 34 soweit zusammengedrückt sind, daß die Spreizklammer 24 aus der Befestigungsnut 30 frei ist (Figuren lb und 2b). Werden die beiden Druckknöpfe 32, 34 weiter zusammengedrückt, so drücken die Schrägflächen 42 den Werkzeugschaft 10 an dessen Umfangsrand 44 vom Motorteil 13 ab (Figuren lc und 2c), der Werkzeugschaft 10 wird aus der Schaftaufnahme 12 ausgeworfen. Das Lösen und Auswerfen des Werkzeugschafts 10 kann also mit einer Hand erfolgen, die das Gehäuse 14 des Motorteils 13 umfaßt und mit Daumen und Zeigefinger die beiden Druckknöpfe 32, 34 zusammendrückt. Der Werkzeugschaft 10 braucht nicht angefaßt zu werden.

Die beiden Druckknöpfe 32, 34 schließen nach außen bündig mit dem Gehäuse 14 ab. Sie stehen also nicht über, wodurch ein versehentliches Lösen des Werkzeugschafts 10 vermieden wird. Sie sind mittels je einer Membran 46 abgedeckt, die am Gehäuse 14 angespritzt ist. Die Membranen 46 verschließen Druckknopföffnungen 48 im Gehäuse 14 und verhindern das Eindringen von Schmutz an dieser Stelle. Der Betätigungsweg der Druckknöpfe 32, 34 beim Lösen und Auswerfen des Werkzeugschafts 10 ist durch deren Zusammenwirken kurz. Die Verformung der Membranen 46 beim Zusammendrücken der Druckknöpfe 32, 34 ist dadurch gering, was ihrer Lebensdauer zugute kommt.

Um das Eindringen von Schmutz an einer Trennfuge 50 zwischen dem Gehäuse 14 des Motorteils 13 und dem Werkzeugschaft 10 zu verhindern, ist eine Dichtung 52 zwischen dem Gehäuse 14 und dem Werkzeugschaft 10 angeordnet. Diese Dichtung 52 ist an das Gehäuse 14 angespritzt. Die Dichtung 52 dichtet zu einer mit dem Werkzeugschaft 10 einstückigen Glocke 54 ab, die das in die Schaftaufnahme 12 eingesteckte Ende des Werkzeugschafts 10 umgibt und sich in Richtung des Gehäuses 14 erweitert, so daß sie bündig an das Gehäuse 14 anschließt. Dies ergibt eine glatte und dadurch gut zu reinigende Außenfläche des Gehäuses 14 mit dem daran befestigten Werkzeugschaft 10.

Zum Einsetzen des Werkzeugschafts 10 in die Schaftaufnahme 12 des Motorteils 13 ist der Umfangsrand 44 an dem dem Motorteil zugewandten Ende des Werkzeugschafts 10 mit einer Kegelstumpffläche 45 versehen. Diese Kegelstumpffläche 45 spreizt die Spreizklammer 24 beim Hineindrücken des Werkzeugschafts 10 in die Schaftaufnahme 12 auseinander, der Werkzeugschaft 10 kann bis zum Einrasten der Spreizklammer 24 in die Befestigungsnut 30 des Werkzeugschafts 10 in die Schaftaufnahme 12 hineingedrückt werden, die Druckknöpfe 32, 34 brauchen dazu nicht betätigt werden. Mit dem Einrasten der Spreizklammer 24 in die Befestigungsnut 30 ist der Werkzeugschaft 10 mit dem Motorteil 13 verbunden. Beim Einstecken des Werkzeugschafts 10 in die Schaftaufnahme 12 gelangen die Flügel 20 der Werkzeugwelle 16 in Eingriff in die Nuten 22 der Antriebswelle 18, so daß die Werkzeugwelle 16 drehfest mit der Antriebswelle 18 verbunden ist.

Um den Werkzeugschaft 10 gegen Verdrehen in Bezug auf den Motorteil 13 zu sichern, weist der Werkzeugschaft 10 an seinem in die Schaftaufnahme 12 eingesteckten Ende einen Außenachtkant 56 auf, der in einem Innenachtkant 58 der Schaftaufnahme 12 formschlüssig gehalten ist.

## Patentansprüche

1. Handmixer mit einem Motorteil (13) und mit einem mit dem Motorteil (13) lösbar verbindbaren Werkzeugschaft (10), in dem eine Werkzeugwelle (16) drehbar gelagert ist, welche bei mit dem Motorteil (13) verbundenem Werkzeugschaft (10) drehfest mit einer Antriebswelle (18) des Motorteils (13) verbunden ist,
**dadurch gekennzeichnet**,
daß zum Verbinden des Werkzeugschafts (10) mit dem Motorteil (13) eine in etwa U-förmige Spreizklammer (24) des Motorteils (13) in eine Befestigungsnut (30) des Werkzeugschafts (10) eingreift und daß beim Verschieben der Spreizklammer (24) mittels eines Druckknopfes (32) die freien Enden (40) der Klammerschenkel (28) an Spreizflächen (38) heraufgleiten, so daß die Spreizklammer (24) gespreizt und die Verbindung zwischen dem Werkzeugschaft (10) und dem Motorteil (13) gelöst wird.

2. Handmixer nach Anspruch 1,
**dadurch gekennzeichnet**,
daß die Spreizklammer (24) an in etwa gleichmäßig über den Umfang verteilten Stellen in die Befestigungsnut (30) eingreift.

3. Handmixer nach Anspruch 1,
**dadurch gekennzeichnet**,
daß die Spreizklammer (24) an zwei einander in etwa diamentral gegenüberliegenden Stellen in die Befestigungsnut (30) eingreift.

4. Handmixer nach einem der Ansprüche 1 bis 3,
**dadurch gekennzeichnet**,
daß die Spreizklammer (24) mittels zweier, einander gegenüberliegend im Motorteil (13) angeordneter Druckknöpfe (32, 34) spreizbar ist, deren einer in einem Scheitelbereich (36) an der Spreizklammer (24) angreift und deren anderer einen Spreizkeil aufweist, der die Spreizklammer (24) spreizt, wenn die beiden Druckknöpfe (32, 34) zusammengedrückt werden.

5. Handmixer nach Anspruch 4,
**dadurch gekennzeichnet**,
daß die beiden Druckknöpfe (32, 34) mit einer Membran (46) abgedeckt sind.

6. Handmixer nach einem der vorhergehenden Ansprüche,
**dadurch gekennzeichnet**,
daß der Werkzeugschaft (10) an seinem dem Motorteil (13) zugewandten Ende eine Kegelstumpffläche (45) aufweist.

7. Handmixer nach einem der vorhergehenden Ansprüche,
**dadurch gekennzeichnet**,
daß der Werkzeugschaft (10) und der Motorteil (13) eine formschlüssige Verdrehsicherung (56, 58) aufweisen.

8. Handmixer nach einem der Ansprüche 4 bis 7,
**dadurch gekennzeichnet**,
daß die Druckknöpfe (32, 34) Schrägflächen (42) aufweisen, die den Werkzeugschaft (10) vom Motorteil (13) abdrücken, wenn die Druckknöpfe (32, 34) zusammengedrückt werden.

9. Handmixer nach einem der Ansprüche 4 bis 8,
**dadurch gekennzeichnet**,
daß die Druckknöpfe (32, 34) nicht oder allenfalls wenig vom Gehäuse (14) des Motorteils (13) nach außen abstehen.

10. Handmixer nach einem der vorhergehenden Ansprüche,
**dadurch gekennzeichnet**,
daß eine Dichtung (52) zwischen dem Gehäuse (14) des Motorteils (13) und dem Werkzeugschaft (10) angeordnet ist.

## Claims

1. A handheld blender comprising a motor assembly (13) and a tool shank (10) releasably connectible with the motor assembly (13) and receiving rotatably therein a tool shaft (16) which, with the tool shank (10) connected with the motor assembly (13), is non-rotatably coupled to a drive shaft (18) of the motor assembly (13),
**characterized in that** connection of the tool shank (10) with the motor assembly (13) is accomplished by engagement of an approximately U-shaped expansion clamp (24) of the motor assembly (13) within a mounting groove (30) of the tool shank (10), and that on a displacement of the expansion clamp (24) by means of a push button (32) the free ends (40) of the clamp legs (28) ride up on expansion surfaces (38), thus causing spreading of the expansion clamp (24) and releasing the connection between the tool shank (10) and the motor assembly (13).

2. A handheld blender as claimed in claim 1,
**characterized in that** the expansion clamp (24) engages the mounting groove (30) at locations distributed approximately evenly about the circumference.

3. A handheld blender as claimed in claim 1,
**characterized in that** the expansion clamp (24) engages the mounting groove (30) at two locations approximately diametrically opposed to one another.

4. A handheld blender as claimed in any one of the claims 1 to 3,
**characterized in that** the expansion clamp (24) is adapted to be spread apart by means of two push buttons (32, 34) arranged on opposed sides of the motor assembly (13), the one push button bearing against an apical area (36) of the expansion clamp (24), while the other push button includes an expansion wedge spreading the expansion clamp (24) apart when the two push buttons (32, 34) are compressed.

5. A handheld blender as claimed in claim 4,
**characterized in that** the two push buttons (32, 34) are each covered by a membrane (46).

6. A handheld blender as claimed in any one of the preceding claims,
**characterized in that** the end of the tool shank (10) close to the motor assembly (13) is provided with a frusto-conical surface (45).

7. A handheld blender as claimed in any one of the preceding claims,
**characterized in that** the tool shank (10) and the motor assembly (13) are provided with a positive-engagement safeguard against relative rotation (56, 58).

8. A handheld blender as claimed in any one of the claims 4 to 7,
**characterized in that** the push buttons (32, 34) are provided with beveled surfaces (42) urging the tool shank (10) away from the motor assembly (13) when the push buttons (32, 34) are compressed.

9. A handheld blender as claimed in any one of the claims 4 to 8,
**characterized in that** the push buttons (32, 34) project outwardly from the housing (14) of the motor assembly (13) by no more than a small amount.

10. A handheld blender as claimed in any one of the preceding claims,
**characterized in that** a seal (52) is disposed between the housing (14) of the motor assembly (13) and the tool shank (10).

## Revendications

1. Mélangeur à main comprenant une partie moteur (13) et un fût d'outil (10) pouvant être assemblé à la partie moteur (13) de façon démontable et dans lequel est monté rotatif un arbre porte-outil (16) qui est relié solidairement en rotation à un arbre d'entraînement (18) de la partie moteur (13) lorsque le fût d'outil (10) est assemblé à la partie moteur,
caractérisé
en ce que, pour assembler le fût d'outil (10) à la partie moteur (13), une épingle expansible (24) à peu près en forme de U appartenant à la partie moteur (13) est engagée dans une gorge de fixation (30) du fût d'outil (10) et en ce que, lorsqu'on déplace l'épingle expansible (24) au moyen d'un bouton poussoir (32), les extrémités libres (40) des branches (28) de l'épingle glissent sur des surfaces d'écartement (38), de sorte que l'épingle expansible (24)) s'écarte et que l'assemblage entre le fût d'outil (10) et la partie moteur (13) est supprimé.

2. Mélangeur à main selon la revendication 1,
caractérisé en ce que l'épingle expansible (24) s'engage dans la gorge de fixation (30) dans des zones à peu près unfiformément réparties sur la périphérie.

3. Mélangeur à main selon la revendication 1,
caractérisé
en ce que l'épingle expansible (24) s'engage dans la gorge de fixation (30) dans deux zones à peu près diamétralement opposées.

4. Mélangeur à main selon une des revendications 1 à 3,
caractérisé
en ce que l'épingle expansible (24) peut être écartée au moyen de deux boutons poussoirs (32, 34) agencés dans la partie moteur (13) dans des positions mutuellement opposées, dont l'un attaque l'épingle expansible (24) dans une région sommitale (36) et dont l'autre présente un coin écarteur qui écarte l'épingle expansible (24) lorsqu'on rapproche les deux boutons poussoirs (32, 34)

5. Mélangeur à main selon la revendication 4,
caractérisé
en ce que les deux boutons poussoirs (32, 34) sont recouverts d'une membrane (46).

6. Mélangeur à main selon une des revendications précédentes,
caractérisé
en ce que le fût d'outil (10) présente une surface tronconique (45) à son extrémité dirigée vers la partie moteur (13).

7. Mélangeur à main selon une des revendications précédentes,
caractérisé
en ce que le fût d'outil (10) et la partie moteur (13) présentent un blocage en rotation (56, 58) opérant par sureté de forme.

8. Mélangeur à main selon une des revendications 4 à 7,
caractérisé
en ce que les boutons poussoirs (32, 34) présentent des plans inclinés (42) qui séparent le fût d'outil (10) de la partie moteur (13) lorsqu'on presse les boutons poussoirs (32, 34) l'un vers l'autre.

9. Mélangeur à main selon une des revendications 4 à 8,
caractérisé
en ce que les boutons poussoirs (32, 34) ne font pas saillie vers l'extérieur ou, du moins ne font que légèrement saillie vers l'extérieur sur le boîtier (14) de la partie moteur (13).

10. Mélangeur à main selon une des revendications précédentes,
caractérisé
en ce qu'une garniture d'étanchéité (52) est interposée entre le boîtier (14) de la partie moteur (13) et le fût d'outil (10).
